# EUROPÄISCHE PATENTSCHRIFT

(11) **EP 4 531 017 B1**
(45) Veröffentlichungstag und Bekanntmachung des Hinweises auf die Patenterteilung: **11.03.2026**
(21) Anmeldenummer: 24194339.8
(22) Anmeldetag: 13.08.2024
(51) Int. Cl.: G08C 17/02, F24C 7/08, H04L 12/28, A47L 15/00, H04W 4/30

(54) **HAUSHALTSGERÄTESYSTEM EINES RAUMES**
DOMESTIC APPLIANCE SYSTEM OF A ROOM
SYSTÈME D'APPAREIL MÉNAGER D'UNE PIÈCE

(30) Priorität: 27.09.2023 BE 202305795
(43) Veröffentlichungstag der Anmeldung: 02.04.2025
(73) Patentinhaber: Miele & Cie. KG, 33332 Gütersloh (DE)
(72) Erfinder: Carsten, Daniel, 33615 Bielefeld (DE)

(56) Entgegenhaltungen:
- WO-A1-2023/131392
- US-A1- 2022 180 732
- US-A1- 2023 083 403

## Beschreibung

Die Erfindung betrifft ein Haushaltsgerätesystem eines Raumes.

Zur Ausführung von bzw. zur Unterstützung bei Haushaltstätigkeiten wie beispielsweise dem Waschen, dem Trocknen, dem Reinigen wie beispielsweise dem Wischen oder Staubsaugen und dergleichen sind seit langem Haushaltsgeräte wie beispielsweise Waschmaschinen, Wäschetrockner, Waschtrockner, Nasssauger, Staubsauger und dergleichen bekannt. Dies gilt ebenso für die Küchengeräte, welche ebenfalls zu den Haushaltsgeräten zählen. So kann sich ein Benutzer beispielsweise durch ein Handrührgerät, einen Pürierstab, einen Wasserkocher und insbesondere durch Gargeräte wie beispielsweise einen Backofen, einen Dampfgarer, ein Kombigerät aus Backofen und Dampfgarer, eine Mikrowelle und dergleichen bei der Zubereitung von Speisen unterstützen lassen. Zu den Küchengeräten sind ferner beispielsweise Dunstabzugshauben, Geschirrspüler, Kühlschränke, Gefrierschränke, Gefriertruhen und dergleichen zu zählen.

Einige Haushaltsgeräte wie beispielsweise Staubsauger und Handrührgeräte werden bei Gebrauch vom Benutzer mit der Hand geführt und bewegt und sind somit als mobil verwendbar anzusehen. Andere bzw. die meisten Haushaltsgeräte wie beispielsweise Waschmaschinen, Wäschetrockner, Backöfen, Dampfgarer, Kühlschränke und dergleichen werden aufgrund ihres Verwendungszwecks aber auch aufgrund ihrer Größe und ihres Gewichts an einem bestimmten Ort im Haushalt bzw. in der Küche oder im Vorratsraum aufgestellt und verwendet und sind somit als stationär verwendbar anzusehen.

Derartige stationär verwendbare Haushaltsgeräte haben üblicherweise gemeinsam, dass sie ein äußeres Gehäuse als Außengehäuse aufweisen, welches das Haushaltsgerät nach außen im Wesentlichen umschließt und dessen einzelnen Bauteile und Elemente schützt sowie gemeinsam handhabbar macht. Innerhalb des Haushaltsgeräts wird ein Innenraum ausgebildet, welcher den Behandlungsraum darstellt und im Wesentlichen von einem inneren Gehäuse als Innengehäuse umschlossen wird. Zwischen dem Innengehäuse und dem Außengehäuse wird ein Gehäuseraum als Zwischenraum gebildet, in welchem Funktionselemente des Haushaltsgeräts wie zum Beispiel eine Steuerung bzw. eine Steuerungseinheit, eine elektrische Energieversorgung und sonstige Bauelemente angeordnet sein können, welche dem bestimmungsgemäßen Gebrauch des Haushaltsgeräts dienen. In der Tiefe von vorne, d.h. aus Sicht eines Benutzers betrachtet, schließt das Außengehäuse bzw. eine Blende in Form eines Möbelmaterials oder in Form einer Bedienblende und dergleichen mit dem Innengehäuse zusammen den Gehäuseraum ab, so dass der Gehäuseraum für den Benutzer nicht zugänglich ist.

Der Innenraum des Haushaltsgeräts weist in der Tiefe nach vorne eine Durchgangsöffnung als Zugangsöffnung auf, durch welche hindurch der Innenraum des Haushaltsgeräts für den Benutzer zugänglich ist, um zu behandelndes Gut wie beispielsweise zu waschende oder zu trocknende Wäsche, zu garende oder zu kühlende Lebensmittel oder dergleichen in den Innenraum des Haushaltsgeräts einzuführen und dort anzuordnen sowie nach erfolgter Behandlung aus dem Innenraum des Haushaltsgeräts zu entnehmen und von dort zu entfernen. Die Zugangsöffnung kann mittels eines Verschlusselements zum Beispiel in Form einer seitlich schwenkbaren Tür, einer nach unten schwenkbaren Klappe und dergleichen vom Benutzer geöffnet werden, um auf den Innenraum des Haushaltsgeräts zugreifen zu können, wie zuvor beschrieben, oder um den Innenraum des Haushaltsgeräts zu verschließen und den Behandlungsvorgang auszuführen. Ein derartiges Verschlusselement kann geschlossen ausgebildet sein oder ein Sichtfenster aufweisen, um dem Benutzer beispielsweise bei einer Waschmaschine oder bei einem Backofen einen Einblick in den geschlossenen Innenraum des Haushaltsgeräts zu ermöglichen.

Es ist mittlerweile im Haushalt bekannt, sog. Sprachassistenten zu verwenden, um u.a. Haushaltsgeräte zu steuern bzw. zu bedienen. Hierbei kann eine Person als Benutzer Anweisungen aussprechen, welche vom Sprachassistenten erfasst, verstanden und ausgeführt werden. Sprachassistenten stellen Software-Programme dar, welche von einer Hardware-Plattform wie beispielsweise der Steuerungseinheit betrieben werden. Derzeit bekannte Sprachassistenten sind beispielweise "Google Assistant", "Siri", "Alexa" und "Cortana".

Sprachassistenten können von separaten Geräten, auch Smart Speaker genannt, verwendet werden, zu denen beispielsweise "Amazon Echo", "Google Home" und der "Apple Home Pod" gehören. Ein Smart Speaker weist üblicherweise sowohl ein Mikrophon zur Erfassung von sprachlichen Anweisungen von Personen als auch einen Lautsprecher zur Ausgabe von sprachlichen Informationen auf. Die Kombination eines Sprachassistenten mit einem Smart Speaker kann als Sprachassistenzsystem bezeichnet werden. Auch ein Smartphone mit einer Sprachassistentensoftware kann ein Sprachassistenzsystem darstellen. Soll auf diese Art und Weise ein Haushaltsgerät gesteuert werden, so kann der Benutzer seine Anweisungen sprachlich an das Sprachassistenzsystem übermitteln. Das Sprachassistenzsystem kann die erkannten Anweisungen dann über WLAN und dergleichen an das Haushaltsgerät weiterleiten.

Sprachassistenten können jedoch auch von Haushaltsgeräten direkt verwendet und auf dessen Steuerungseinheit betrieben werden. In diesem Fall weist das Haushaltsgerät selbst wenigstens ein Mikrophon zur Erfassung von sprachlichen Anweisungen von Personen und vorzugsweise auch einen Lautsprecher zur Ausgabe von sprachlichen Informationen auf.

In jedem Fall ist es üblich, den Sprachassistenten bzw. die Sprachassistenzfunktion seitens des Benutzers bewusst zu aktivieren, um die nun folgende Sprache als Spracheingabe an den Sprachassistenten vom übrigen Gespräch des Benutzers zu unterscheiden. Dies geschieht bisher üblicherweise über ein Wake-Word, welches von einem Smart Speaker, von einem Smartphone bzw. von einem Haushaltsgerät aufgenommen wird.

Nachteilig ist hieran, dass das Wake-Word allgemeingültig ist und somit von jeder Person und damit auch von anderen Personen als dem Benutzer des Haushaltsgeräts, welcher aktuell einen Behandlungsvorgang durchführen möchte, verwendet werden kann.

Nachteilig ist ferner, dass zum Aktivieren des Sprachassistenten üblicherweise ein relativ langer Sprachbefehl vom Benutzer ausgesprochen werden muss, der ferner nicht intuitiv ist und eine bestimmte Syntax besitzt. Das macht den Gebrauch für den Benutzer unkomfortabel. Auch muss der Benutzer genau überlegen, was er sagen muss.

Es ist auch bekannt, eine Sprachassistenzfunktion mittels einer Bilderkennung eines Benutzers zu aktivieren, so dass auf das Aussprechen eines Wake-Word seitens des Benutzers verzichtet werden kann. Hierbei kann unterschieden werden, ob lediglich überhaupt eine Person erkannt und dies als Anlass der Aktivierung des Sprachassistenten verwendet oder eine konkrete Person als Benutzer individuell aus den erfassten Bilddaten erkannt und von anderen Personen unterschieden werden soll.

Nachteilig ist in jedem Fall, dass eine entsprechende Bilderfassung mittels Kamera oder dergleichen sowie die Verarbeitung der erfassten Bilddaten mittels Bilderkennung einen zusätzlichen und nicht unerheblichen Aufwand verursacht. Dabei muss die Bilderfassung durchgängig erfolgen, also stets aktiv sein und betrieben werden, um jederzeit den Benutzer erkennen und hierauf reagieren zu können.

Auch hängt die Qualität bzw. das Ergebnis der Bilderkennung, insbesondere zur Erkennung einer bestimmten Person, von den Randbedingungen und insbesondere von den Sicht- bzw. Lichtverhältnissen sowie von der Qualität der Bilderfassung ab, wobei eine höhere Qualität der Bilderfassung bzw. der Kamera auch zu höheren Kosten führt. Ferner ist die Anwendung einer Bilderfassung und -erkennung auf den Bereich beschränkt, in welchem, beispielsweise unmittelbar vor dem Haushaltsgerät, überhaupt eine Erfassung von Bildern stattfinden kann. Des Weiteren können von der Bilderfassung auch Personen im Bilderfassungsbereich erfasst und erkannt werden, welche gar nicht von Relevanz sind und bzw. oder welche gar nicht erfasst und erkannt werden wollen.

Es ist heutzutage auch bekannt, dass sich das Tagging, d.h. das Markieren, eines Benutzers über ein bereits vorhandenes smartes Device wie beispielsweise ein Smartphone, eine Smart watch oder ein anderes smartes Wearable sehr gut zur Benutzererkennung und auch zur Lokalisierung des Benutzers eignet, sofern der verwendete Funkstandard zur präzisen Orts- bzw. Abstandsbestimmung geeignet ist. Die Kommunikation zur Lokalisierung erfordert normalerweise ein geeignetes Funkmodul im Hausgerät, über das der Ort des Benutzers ermittelt wird, um benutzerspezifische und ortsabhängige Use-Cases und bzw. oder Gerätereaktionen hervorzurufen.

Bekannt ist eine Benutzererkennung mittels der Technologie der Ultrabreitband-Kommunikation (UWB-Kommunikation). Mit dieser Technologie lässt sich über ein Kommunikationsprotokoll eine gesicherte ID (Identifikation) des Benutzers übermitteln sowie eine bis auf 10 cm genaue Abstandsmessung und eine bis auf 3° genaue Richtungsbestimmung eines empfangenen Signals durchführen, das zwischen zwei UWB-Teilnehmern gesendet wird. Dabei wird von einer Kommunikation zwischen einem UWB-Funkmodul im Hausgerät und einem smarten Device mit UWB-Funktechnologie am Körper des Benutzers ausgegangen. Ein solches System ist aus WO 2023/131392 A1 bekannt.

Somit ist das Erkennen und Lokalisieren eines Benutzers anhand eines mitgeführten smarten Devices mit UWB-Funktechnologie, durch ein UWB-Funkmodul im Hausgerät, bekannt, wodurch eine auf Benutzer und Ort abhängige Gerätefunktion des Hausgeräts ausgelöst werden kann.

Nachteilig ist hierbei jedoch, dass hierzu in jedem Hausgerät, das die Präsenz, Annäherung oder Nähe eines Benutzers erkennen muss, ein UWB-Funkmodul vorhanden sein muss, um eine Gerätefunktion anhand vordefinierter oder erlernter Merkmale auszuführen. Dies kann für gewisse Gerätekategorien kostenintensiv sein. Außerdem muss das Hausgerät aktuell und mit einem solchen UWB-Funkmodul ausgerüstet sein. Ältere Geräte könnten nur mit extremem Aufwand nachgerüstet werden.

Der Erfindung stellt sich das Problem, auch bei Haushaltsgeräten, die nicht über eine Funktion der Benutzeridentifikation und bzw. oder Benutzerlokalisierung, insbesondere über kein UWB-Funkmodul, verfügen, Assistenzfunktionen anhand der Benutzeridentifikation und bzw. oder Benutzerlokalisierung zur Verfügung zu stellen. Dies soll möglichst einfach, kostengünstig, zuverlässig und bzw. oder energieeffizient erfolgen.

Erfindungsgemäß wird dieses Problem durch ein Haushaltsgerätesystem sowie durch ein Verfahren mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung ein Haushaltsgerätesystem eines Raumes mit einem nicht-UWB-fähigen Haushaltsgerät, einem UWB-fähigen Gerät und einem UWB-fähigen mobilen Endgerät eines Benutzers, wobei das UWB-fähige Gerät ausgebildet und eingerichtet ist,
das UWB-fähige mobile Endgerät zu identifizieren,
das UWB-fähige mobile Endgerät relativ zu sich selbst, vorzugsweise mittels Abstand und Winkel, im Raum zu lokalisieren,
die aktuelle Position des Benutzers anhand dessen UWB-fähigen mobilen Endgeräts relativ zum nicht-UWB-fähigen Haushaltsgerät im Raum zu bestimmen und
wobei das nicht-UWB-fähige Haushaltsgerät ausgebildet und eingerichtet ist,
falls sich der Benutzer in einer vorbestimmten Nähe zum nicht-UWB-fähigen Haushaltsgerät im Raum befindet, einen benutzerspezifischen Betrieb auszuführen.

Das Haushaltsgerät kann ein jegliches Haushaltsgerät und insbesondere ein jegliches Küchengerät sein. Insbesondere kann das Haushaltsgerät ein stationäres Haushaltsgerät und insbesondere ein Einbauhaushaltsgerät sein. Beispielsweise kann das stationäre Haushaltsgerät eine Waschmaschine, ein Trockner, ein Kühlschrank, ein Kochfeld, ein Backofen, ein Dampfgarer und dergleichen sein.

Die vorbestimmte Nähe kann derart bemessen sein, dass der Benutzer das nicht-UWB-fähige Haushaltsgerät bedienen oder zumindest eine Anzeige des nicht-UWB-fähigen Haushaltsgeräts optisch erkennen kann.

Der Raum ist ein Raum eines Gebäudes, in welchem sich das nicht-UWB-fähige Haushaltsgerät, das UWB-fähige Gerät sowie das UWB-fähige mobile Endgerät des Benutzers gleichzeitig gemeinsam aufhalten. Der Raum kann jedoch auch ein Bereich eines Gebäudes sowie mehrere angrenzende Räume sein, sofern die zuvor beschriebenen Merkmale über diese Räume hinweg gemeinsam und gleichzeitig ausgeführt werden können.

In jedem Fall liegt der Erfindung die Erkenntnis zugrunde, dass mittels eines UWB-fähigen Geräts, welches zum einen auf andere Art und Weise als mittels einer UWB-Kommunikation als Funkstandard zur präzisen Orts- bzw. Abstandsbestimmung mit dem nicht-UWB-fähigen Haushaltsgerät zumindest einseitig drahtlos oder drahtgebunden zum nicht-UWB-fähigen Haushaltsgerät hin und vorzugsweise beidseitig kommunizieren kann und zum anderen einen Benutzer identifizieren und relativ zum nicht-UWB-fähigen Haushaltsgerät lokalisieren kann, Funktionen, welche eine UWB-Kommunikation erfordern, dennoch seitens des nicht-UWB-fähigen Haushaltsgeräts ermöglicht werden können.

Somit kann die Identifikation und Lokalisierung eines Benutzers anhand dessen bei sich getragenen UWB-fähigen mobilen Endgeräts wie beispielsweise einem Smartphone, einer Smartwatch und dergleichen relativ zum nicht-UWB-fähigen Haushaltsgerät vom UWB-fähigen Gerät übernommen und dem nicht-UWB-fähigen Haushaltsgerät über eine andere Kommunikationstechnologie als UWB mitgeteilt werden, so dass im Ergebnis die gleichen bzw. vergleichbaren Informationen hinsichtlich der Identifikation und Lokalisierung des Benutzers beim nicht-UWB-fähigen Haushaltsgerät vorliegen, als wenn dieses Haushaltsgerät selbst UWB-fähig wäre.

Die Überprüfung bzw. der Vergleich von Positionsinformationen, ob sich der Benutzer in ausreichender Nähe zum nicht-UWB-fähigen Haushaltsgerät befindet oder nicht, kann dabei sowohl seitens des UWB-fähigen Geräts erfolgen und im Falle einer ausreichenden Nähe das nicht-UWB-fähige Haushaltsgerät über eine andere Kommunikationstechnologie als UWB hierüber informiert werden, um hierauf zu reagieren, was als einfachere Möglichkeit der Realisierung angesehen werden kann. Alternativ kann aber auch die aktuelle Position des Benutzers sowie eine bekannte Position des nicht-UWB-fähigen Haushaltsgeräts dem nicht-UWB-fähigen Haushaltsgerät über eine andere Kommunikationstechnologie als UWB mitgeteilt werden, so dass der entsprechende Vergleich von Positionsinformationen dort erfolgen kann, um hierauf zu reagieren.

Unter UWB-Kommunikation wird dabei die UWB-Technologie selbst sowie jegliche sonstige Technologie bzw. Kommunikation verstanden, welche im Ergebnis zu denselben bzw. vergleichbaren Informationen hinsichtlich der Identifikation und Lokalisierung des Benutzers anhand dessen mobilen Endgerät führt. Unter UWB-Kommunikation wird somit jeglicher Funkstandard zur präzisen Orts- bzw. Abstandsbestimmung verstanden.

UWB steht für Ultra Wideband und beschreibt die Verwendung eines breitbandigen, min. 500 MHz breiten, Funksignals in einem Frequenzbereich von 3,1 GHz bis 10,6 GHz. Die erzeugten Funksignale liegen zeitlich im Nanosekundenbereich. Daher lassen sich hohe Datenraten erzeugen, aber auch Laufzeitmessungen vornehmen, wodurch präzise Abstandsmessungen zwischen zwei UWB-Teilnehmern kleiner 10 cm möglich sind und je nach Antennendesign bzw. bei Verwendung mehrerer Antennen über einen Laufzeitunterschied auch Richtungen der Funksignale mit Genauigkeiten um die 3° bestimmt werden können. Typische Messverfahren sind hier das Two Way Ranging und die PDoA (Phasendifferenz der angekommenen Signale).

Als technische Basis kann auf IEEE802.15.4z gesetzt werden. Es handelt sich um ein Funkprotokoll für UWB Kommunikation, dass nur eine geringe spektrale Leistung verwenden darf. Über die geringe spektrale Leistung ist es reichweitenreduziert. Durch die hohe Bandbreite (500 MHz) sind sehr kurze Pulse möglich, die für genaue Laufzeitmessungen verwendet werden können.

In jedem Fall können auf diese Art und Weise Funktionen, welche eine Identifikation und Lokalisierung des Benutzers erfordern, auch bei Haushaltsgeräten durchgeführt werden, welche selbst keine UWB-Kommunikation ermöglichen jedoch auf anderem Kommunikationsweg diese Informationen von einem UWB-fähigen Gerät erhalten können. Diese Funktionen können somit sozusagen nachgerüstet bzw. zur Verfügung gestellt werden, ohne den Aufwand einer UWB-Kommunikation bei diesem Haushaltsgerät betreiben zu müssen.

In jedem Fall kann die Bedienung bzw. der Betrieb des nicht-UWB-fähigen Haushaltsgeräts konkret auf den identifizierten Benutzer eingestellt werden, was den Komfort der Benutzung bzw. der Verwendung des nicht-UWB-fähigen Haushaltsgeräts für den Benutzer aufgrund dieser Individualisierung erhöhen kann. Auch können hierdurch Sicherheitsfunktionen realisiert werden, um beispielsweise Kinder von der Benutzung des nicht-UWB-fähigen Haushaltsgeräts vollkommen auszuschließen oder zumindest die Benutzung des nicht-UWB-fähigen Haushaltsgeräts für Kinder auf bestimmte Funktionen sowie Parameter einzuschränken.

Gemäß der Erfindung ist das UWB-fähige Gerät ferner ausgebildet und eingerichtet, die aktuelle Position des Benutzers relativ zum nicht-UWB-fähigen Haushaltsgerät im Raum dem nicht-UWB-fähigen Haushaltsgerät mittels einer nicht-UWB-Kommunikation zuzusenden, und wobei das nicht-UWB-fähige Haushaltsgerät ferner ausgebildet und eingerichtet ist, die aktuelle Position des Benutzers relativ zu sich selbst im Raum vom UWB-fähigen Gerät mittels der nicht-UWB-Kommunikation zu erhalten.

In diesem Fall kann die aktuelle Position des Benutzers relativ zum nicht-UWB-fähigen Haushaltsgerät im Raum seitens des UWB-fähigen Geräts bestimmt bzw. berechnet und diese Information dem nicht-UWB-fähigen Haushaltsgerät mittels der nicht-UWB-Kommunikation als Ergebnis übergeben werden. Dies kann das nicht-UWB-fähige Haushaltsgerät von dieser Funktion entlasten.

Gemäß einem weiteren Aspekt der Erfindung umfasst der benutzerspezifische Betrieb eine benutzerspezifische Funktionsauswahl und bzw. oder eine benutzerspezifische Funktionsparametrierung. Dies kann die Gestaltungsmöglichkeiten der individuellen Benutzung sowie der Sicherheitsfunktionen weiter erhöhen.

Gemäß einem weiteren Aspekt der Erfindung umfasst der benutzerspezifische Betrieb eine Aktivierung des nicht-UWB-fähigen Haushaltsgeräts. Dies kann die Gestaltungsmöglichkeiten der individuellen Benutzung sowie der Sicherheitsfunktionen weiter erhöhen.

Gemäß einem weiteren Aspekt der Erfindung weist das Haushaltsgerätesystem mehrere nicht-UWB-fähige Haushaltsgerät auf, welche jeweils ausgebildet und eingerichtet sind, jeweils einen benutzerspezifischen Betrieb auszuführen. Dies kann die Nutzungsmöglichkeiten des erfindungsgemäßen Haushaltsgerätesystems weiter erhöhen.

Gemäß der Erfindung ist das nicht-UWB-fähige Haushaltsgerät ausgebildet und eingerichtet, eine erfolgte Bedienung durch den Benutzer dem UWB-fähigen mobilen Endgerät mittels der nicht-UWB-Kommunikation zuzusenden, und das UWB-fähige Gerät ist ausgebildet und eingerichtet, die erfolgte Bedienung des nicht-UWB-fähigen Haushaltsgerät durch den Benutzer vom nicht-UWB-fähigen Haushaltsgerät mittels der nicht-UWB-Kommunikation zu erhalten und das nicht-UWB-fähige Haushaltsgerät der entsprechenden aktuellen Position des Benutzers relativ zu sich selbst im Raum zuzuordnen.

Hierdurch kann vorab oder während der Nutzung der zuvor beschriebenen Funktionen eine Karte des Raums angelegt werden, um die Position des nicht-UWB-fähigen Haushaltsgeräts bzw. die Position des Benutzers bei der Bedienung bzw. Benutzung des nicht-UWB-fähigen Haushaltsgeräts zu erfassen und als Karte zu speichern. Dies kann die Umsetzung der zuvor beschriebenen Funktionen verbessern bzw. erleichtern.

Gemäß einem weiteren Aspekt der Erfindung ist das UWB-fähige Gerät ausgebildet und eingerichtet, aus den bekannten Positionen des Benutzers relativ zu sich selbst eine Karte des Raums zu erstellen und aus der erfolgten Bedienung des nicht-UWB-fähigen Haushaltsgeräts durch den Benutzer das nicht-UWB-fähige Haushaltsgerät der entsprechenden Position im Raum zuzuordnen. Dies kann eine konkretere Umsetzung der zuvor beschriebenen Funktionen ermöglichen.

Gemäß einem weiteren Aspekt der Erfindung ist das UWB-fähige Gerät ausgebildet und eingerichtet, aus einer Abweichung der aktuellen Position des Benutzers im Raum bei erfolgter Bedienung des nicht-UWB-fähigen Haushaltsgerät und der zugeordneten Position des nicht-UWB-fähigen Haushaltsgerät im Raum eine Veränderung der eigenen Position im Raum zu erkennen und, in Reaktion hierauf, aus der erfolgten Bedienung des nicht-UWB-fähigen Haushaltsgeräts durch den Benutzer das nicht-UWB-fähige Haushaltsgerät der entsprechenden neuen Position im Raum zuzuordnen.

Somit kann das UWB-fähige Gerät selbsttätig erkennen, dass es von einer Person im Raum bewegt, d.h. dass seine eigene Position verändert, wurde, wodurch die zuvor beschriebenen Karteninformationen ungültig werden und insbesondere die Position des nicht-UWB-fähigen Haushaltsgeräts relativ zum UWB-fähigen Gerät nicht mehr bekannt ist. Entsprechend müssen diese Informationen zuerst wieder neu erfasst werden, wie zuvor beschrieben, um die zuvor beschriebenen Funktionen wieder nutzen zu können.

Gemäß einem weiteren Aspekt der Erfindung ist das UWB-fähige Gerät ein UWB-fähiges Haushaltsgerät. Somit kann ein UWB-fähiges Haushaltsgerät mit einem nicht-UWB-fähigen Haushaltsgerät wie zuvor beschrieben zusammenwirken bzw. zusammenarbeiten.

Gemäß einem weiteren Aspekt der Erfindung ist das UWB-fähige Gerät ein UWB-fähiges Sprachassistenzsystem. Somit kann ein UWB-fähiges Sprachassistenzsystem wie beispielsweise "Google Assistant", "Siri", "Alexa" oder "Cortana" mit einem nicht-UWB-fähigen Haushaltsgerät wie zuvor beschrieben zusammenwirken bzw. zusammenarbeiten.

Die Erfindung betrifft auch ein Verfahren nach Anspruch 9.

Hierdurch kann ein Verfahren zur Verfügung gestellt werden, um die zuvor beschriebenen Aspekte und Funktionen umzusetzen und zu nutzen.

Mit anderen Worten kann erfindungsgemäß ein alternativer Kommunikationsweg geschaffen werden, über den mindestens der Befehl zum Auslösen einer Gerätefunktion gegeben werden kann.

Die Aufgabe kann somit durch ein Verfahren sowie ein entsprechendes System gelöst werden, bei dem der Benutzer ein smartes Device mit beispielsweise UWB-Funktechnologie mit sich führt und sich mindestens ein beispielsweise UWB-Funkmodul in einem Gerät im Raum mit den zu steuernden Hausgeräten befindet, über das der Benutzer erkannt und lokalisiert werden kann. Dieses Gerät sei im Folgenden als UWB-Hub bezeichnet.

Der UWB-Hub identifiziert den Benutzer anhand der ID des smarten Devices und lokalisiert diesen beispielsweise über "Time Difference of Arrival" und bzw. oder "Angle of Arrival"-Messmethoden der UWB-Technologie mit dem smarten Device am Körper des Benutzers. Der UWB-Hub weiß damit zu jeder Zeit, wer sich in seiner Nähe befindet, und kennt die relative Position zwischen sich und dem lokalisierten Benutzer.

Anhand der Laufwege des Benutzers im Raum über eine gewisse Zeit kann der UWB-Hub eine Raumkarte erstellen. Der lokalisierte Benutzer wird mit der Zeit an unterschiedlichen Stellen im Raum für eine gewisse Zeit verharren und, sofern es sich beispielsweise um die Küche handelt, dort Hausgeräte bedienen.

Über eine alternative Datenkommunikation zwischen UWB-Hub und den Hausgeräten können Informationen ausgetauscht werden. Diese Informationen können die Kenntnis des Benutzers, dem relativen Ort des Benutzers zum UWB-Hub und damit auch den Ort innerhalb der erstellten Raumkarte sowie der Kenntnis über eine Bedienung eines Hausgerätes aufweisen. Die Bedienung lässt sich z.B. über einen Türkontakt durch das Öffnen und Schließen der Tür oder über die Benutzung der Bedienoberfläche feststellen.

Aus diesen Informationen lassen sich Assistenzfunktionen ableiten, die anhand eines wiederkehrenden Benutzerverhaltens trainiert und dem Benutzer angeboten oder vom Benutzer selbst einprogrammiert werden können. Es kann auch ein unmittelbar vor der Bedienung des Hausgerätes zurückgelegter Laufweg mitberücksichtigt werden, um eine Absichtserkennung des Benutzers zu implementieren. Die Informationen können sowohl im UWB-Hub, im Hausgerät, im smarten Device des Benutzers oder in einer Cloud verarbeitet werden.

Die für die Assistenzfunktion notwendige Gerätereaktion kann als Kommando über den alternativen Kommunikationskanal an das Hausgerät gesendet werden, falls die Auswertung der Informationen nicht im Hausgerät durchgeführt wird. Andernfalls werden die gesammelten Informationen über diesen alternativen Kommunikationsweg zur Auswertung an das Hausgerät gesendet. Als alternative Kommunikationskanäle bieten sich WiFi, Bluetooth oder Zigbee sowie drahtgebundene Kommunikationswege z.B. zwischen Hausgerät und einem Internetrouter oder zwischen dem UWB-Hub und einem Internetrouter an.

Der UWB-Hub kann ein eigenständiges, externes Gerät wie ein Lautsprecher (Smart Speaker), ein Sprachassistent, ein smartes Display (z.B. Amazons Echo Show), ein Kommunikations-Hub bzw. eine Bridge oder Controller für Smart-Home-Anwendungen oder ein integriertes UWB-Funkmodul in einem einzelnen Hausgerät sein.

Der UWB-Hub sollte während einer Lernphase sowie während der Verwendung der erlernten, oder programmierten Assistenzfunktionen seine Position nicht verändern. Andernfalls gibt es eine neue Lernphase zur Ermittlung der Positionen und Laufwege und der Erstellung der Raumkarte.

Es seien zwei Beispiele für umsetzbare Assistenzfunktionen betrachtet:
Der Benutzer betritt jeden Morgen die Küche, geht zum Kaffeeautomaten und wählt einen Milchkaffee. Anhand des beschriebenen Verfahrens erkennt das System den Benutzer an seiner UWB-fähigen Smart watch. Durch die Lokalisierung wird der Laufweg durch die Küche auf den Kaffeeautomaten erkannt. Beim Verharren des Benutzers an einer immer gleichen Position wird der Kaffeeautomat bedient und das Getränk "Milchkaffee" ausgewählt. Das System lernt diese Informationen (Benutzer, Laufweg, Hausgerätebedienung, Milchkaffee, Tageszeit) und bietet den Use-Case "Wunschgetränk" an, der benutzerspezifisch und tageszeitabhängig anhand der Annäherung auf den Kaffeeautomaten ausgelöst wird. Für andere Haushaltsmitglieder werden andere Wunschgetränke angeboten.

Der Benutzer hat eine eingeschränkte Gerätenutzung an seinem Backofen eingestellt. Es sollen bestimmte Funktionen wie z.B. die Pyrolyse nur von den Erwachsenen verwendet werden können. Der Benutzer legt im System fest, dass nur bei Anwesenheit bestimmter Personen, abhängig von der erkannten ID des jeweiligen smarten Devices, diese Gerätefunktionen freigeschaltet werden. Außerdem legt der Benutzer fest, dass bei Annäherung und Anwesenheit vor einem Hausgerät eine benutzerspezifische Bedienoberfläche aufgerufen wird, die jeder Benutzer individuell festlegen kann.

Es kommt auch in Betracht, dass der UWB-Hub über eine "Raumerkennung" verfügen kann, die mit Hilfe des Mikrofonarrays und Schallreflexion funktionieren kann. Somit kann der beschriebene UWB-Hub zusätzlich auch noch selber über eine Bestimmung seiner Position im Raum verfügen, die redundant oder vollständig zur Erzeugung einer Raumkarte fungieren kann. Diese zusätzliche Erkennung kann aber auch dafür sorgen, dass erkannt wird, falls der UWB-Hub im Raum bewegt oder umgestellt wurde. In diesem Falle wären alle Use-Cases hinfällig und müssten neu trainiert werden. So werden dann auch keine Use-Cases fehlerhaft ausgelöst. Es kann nämlich sein, dass sich ein Haupt-User im Haushalt den UWB-Hub positioniert hat und dann ein anderes Haushaltsmitglied wie z.B. ein Kind den UWB-Hub woanders hinstellt. Eine Erkennung über die Funktion der Raumerkennung seitens des UWB-Hubs oder über einen Beschleunigungssensor, der dann den Haupt-User darüber informiert, wäre sinnvoll.

In jedem Fall sind keine UWB-Funkmodule oder dergleichen in jedem einzelnen Hausgerät notwendig. Dies spart einerseits Kosten, zum anderen können auch bereits vorhandene Hausgeräte, die mindestens über einen Kommunikationskanal zum Starten der Gerätefunktionen verfügen, verwendet werden, so dass eine gewisse Abwärtskompatibilität vorhanden ist. Darüber hinaus gibt es auch Hausgeräte, für die eine Integration eines UWB-Funkmoduls oder dergleichen ausgeschlossen sein könnte, da das Gerätegehäuse keine oder nur sehr schlecht Funksignale durchlässt. Hier kann es auch zu einem starken Einfluss bei der Genauigkeit der Lokalisierung kommen, so dass eine Lokalisierung über einen externen UWB-Hub präziser sein kann. Ein alternativer Kommunikationsweg zur Übertragung der Informationen ist ggf. vorhanden oder einfacher in der Umsetzung. Auch können ortsveränderliche Hausgeräte wie akkubetriebene Handstaubsauger, Saugroboter oder Luftreiniger die Messungen zur Lokalisierung des Benutzers erschweren. Es sollte mindestens ein UWB-Teilnehmer als sogenannter Anker ortsfest sein, um eine feste Antennenorientierung zur Ortung und Richtungsbestimmung der UWB-Funksignale zu haben.

Ein Ausführungsbeispiel der Erfindung ist in den Zeichnungen rein schematisch dargestellt und wird nachfolgend näher beschrieben. Es zeigt
- Figur 1: eine perspektivische Ansicht eines Raums in Form einer Küche von schräg oben vorne mit einem erfindungsgemäßen Haushaltsgerätesystem; und
- Figur 2: die Darstellung der Figur 1 von oben ergänzt um eine Karte von Positionen.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft entspricht. Die Längsachse X und die Querachse Y bilden gemeinsam die Horizontale X, Y, welche auch als horizontale Ebene X, Y bezeichnet werden kann.

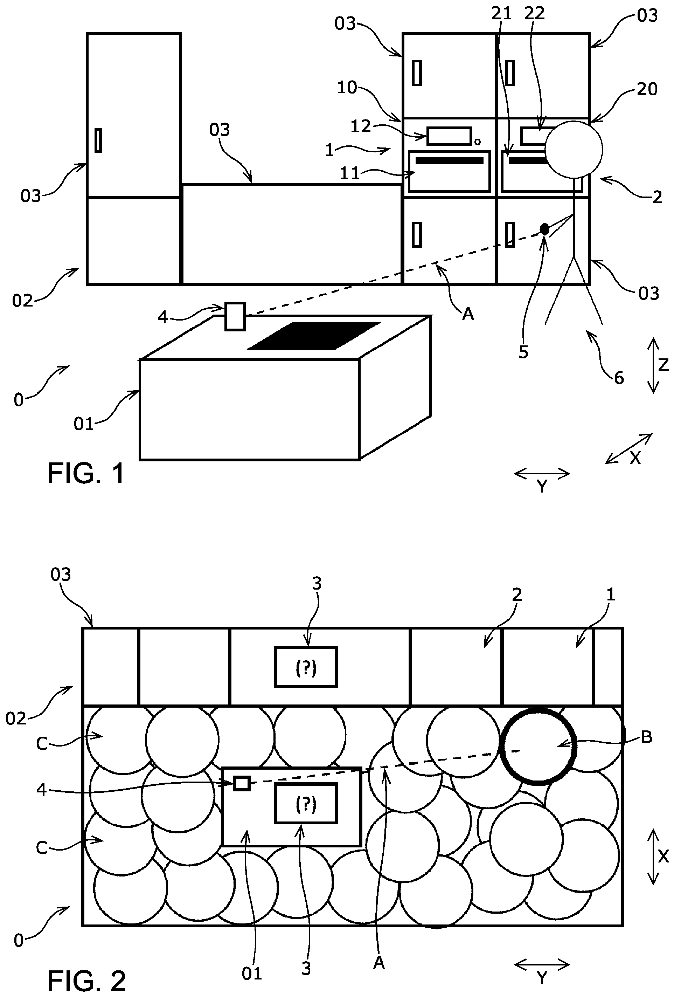

Figur 1 zeigt eine perspektivische Ansicht eines Raums 0 in Form einer Küche 0 von schräg oben vorne mit einem erfindungsgemäßen Haushaltsgerätesystem. Figur 2 zeigt die Darstellung der Figur 1 von oben ergänzt um eine Karte von Positionen B, C.

Das erfindungsgemäße Haushaltsgerätesystem umfasst ein erstes nicht-UWB-fähiges Haushaltsgerät 1 in Form eines Backofens 1, ein zweites nicht-UWB-fähiges Haushaltsgerät 2 in Form eines Dampfgarer 2 sowie (nur in der Figur 2 dargestellt und betrachtet) ein drittes nicht-UWB-fähiges Haushaltsgerät 3 in Form einer Mikrowelle 3. Ferner umfasst das erfindungsgemäße Haushaltsgerätesystem ein UWB-fähiges Gerät 4 in Form eines UWB-fähiges Sprachassistenzsystems 4 sowie ein UWB-fähiges mobiles Endgerät 5 in Form eines UWB-Wearables 5 als UWB-Smartwatch 5, welche von einer Person als Benutzer 6 am linken Handgelenk getragen wird.

Die Küche 0 weist im Vordergrund eine Kochinsel 01 mit einem Kochfeld (nicht bezeichnet) auf. Die Küche 0 weist im Hintergrund eine querverlaufende Küchenzeile 02 auf, welche mehrere Küchenmöbel 03 aufweist. Auf der Kochinsel 01 ist das UWB-fähige Sprachassistenzsystem 4 angeordnet. Der Backofen 1 und der Dampfgarer 2 sind als Einbaugeräte in den Küchenmöbeln 03 stationär angeordnet. In der Figur 2 ist die Mikrowelle 3 entweder auf der querverlaufenden Küchenzeile 02 oder auf der Kochinsel 01 angeordnet, da die Position der Mikrowelle 3 nicht eindeutig bekannt ist, wie weiter unten noch näher erläutert werden wird.

Der Backofen 1 und der Dampfgarer 2 weisen jeweils ein Außengehäuse (nicht bezeichnet) auf, welches auch als äußeres Gehäuse bezeichnet werden kann und das jeweilige Haushaltgerät 1, 2 im Wesentlichen nach außen abschließt bzw. umschließt. Das Außengehäuse schließt jeweils entlang der Längsachse nach vorne, d.h. zur Küche 0 hin, im oberen Bereich mit einer Blende 10, 20 ab. Die Blende 10, 20 weist jeweils ein Anzeige-/Bedienelement 12, 22 in Form eines Displays 12, 22 auf.

Innerhalb des Außengehäuses ist ein Garraum (nicht dargestellt) vorhanden, welcher entlang der Längsachse X für den Benutzer 6 von vorne durch eine Zugangsöffnung (nicht dargestellt) hindurch, welche sich unterhalb der Blende 10, 20 befindet, zugänglich ist. Die Zugangsöffnung kann jeweils mittels eines Verschlusselements 11, 21 in Form einer Klappe 11, 21 geschlossen und geöffnet werden.

Jedes Haushaltgerät 1, 2 weist ferner ein nicht-UWB-fähiges Kommunikationsmodul auf, um in beide Übertragungsrichtungen mit dem UWB-fähigen Sprachassistenzsystem 4 kommunizieren zu können, welches sowohl zur Kommunikation mittels UWB mit der UWB-Smartwatch 5 eines Benutzers 6 als auch zur Kommunikation mittels einer nicht-UWB-Technologie mit dem Backofen 1 und dem Dampfgarer 2 als nicht-UWB-fähige Haushaltsgeräte 1, 2 fähig ist. Hierzu weist das UWB-fähige Sprachassistenzsystem 4 jeweils ein separates Kommunikationsmodul (nicht dargestellt) auf, welche jeweils von einer Steuerungseinheit (nicht dargestellt) des UWB-fähigen Sprachassistenzsystems 4 betrieben bzw. angesteuert werden können. Ebenso weist jedes Haushaltgerät 1, 2 eine Steuerungseinheit (nicht dargestellt) zum Betrieb der jeweiligen Komponenten und Module auf.

Allgemein kann die UWB-Kommunikation zwischen dem UWB-fähigen Sprachassistenzsystem 4 und dem UWB-fähigen mobilen Endgerät 5 des Benutzers 6 verwendet werden, um das UWB-fähige mobile Endgerät 5 zu identifizieren und dem Benutzer 6 zuzuordnen, wodurch auch der Benutzer 6 identifiziert werden kann. Auch kann das UWB-fähige mobile Endgerät 5 und damit zumindest grob der Benutzer 6 vom UWB-fähigen Sprachassistenzsystem 4 geortet werden, was eine Bestimmung einer Orientierung sowie eines Abstands zwischen dem UWB-fähigen Sprachassistenzsystem 4 und dem UWB-fähigen mobilen Endgerät 5 ermöglicht.

Diese Information kann als aktuelle Position B des Benutzers 6 seitens des UWB-fähigen Sprachassistenzsystems 4 gespeichert werden. Dies kann fortlaufend wiederholend erfolgen, so dass eine Karte der Küche 0 hinsichtlich der bekannten Positionen C des Benutzers 6 erstellt und seitens des UWB-fähigen Sprachassistenzsystems 4 gespeichert werden kann.

In jedem Fall kann ein fortlaufendes Vergleichen der aktuellen Position B des Benutzers 6 seitens des UWB-fähigen Sprachassistenzsystems 4 mit einer gespeicherten Position C in unmittelbarer bzw. in ausreichender Nähe zu jedem der nicht-UWB-fähigen Haushaltsgeräte 1, 2, 3 erfolgen, um zu erkennen, falls sich der Benutzer 6 in ausreichender Nähe vor einem der nicht-UWB-fähigen Haushaltsgeräte 1, 2, 3 aufhält bzw. dort ausreichend lang verweilt, um auf die Absicht des Benutzens des entsprechenden nicht-UWB-fähigen Haushaltsgeräts 1, 2, 3 durch den Benutzer 6 zu schließen. Dies kann hinsichtlich der Mikrowelle 3 in der Darstellung der Figur 3 nicht eindeutig aber ausreichend sein, um die Mikrowelle 3 dennoch zu aktiveren.

Soll eine Benutzung erfolgen und wird dies erkannt, so kann zum einen das jeweilige nicht-UWB-fähige Haushaltsgerät 1, 2, 3 aus einem Ruhemodus bzw. Stand-By-Modus aufgeweckt und vollständig in Betrieb genommen werden. Zum anderen kann der Betrieb des nicht-UWB-fähigen Haushaltsgeräts 1, 2, 3 auf den Benutzer angepasst werden, was hinsichtlich der angezeigten bzw. zugreifbaren Funktionen sowie deren Parameter erfolgen kann. Somit können auch die nicht-UWB-fähigen Haushaltsgeräte 1, 2, 3 wie UWB-fähige Haushaltsgeräte 1, 2, 3 genutzt werden.

### Bezugszeichenliste (Bestandteil der Beschreibung)

- A: drahtlose Kommunikationsverbindung
- B: aktuelle Position des Benutzers 6
- C: bekannte Positionen des Benutzers 6

- X: Längsachse; Tiefe; Länge
- Y: Querachse; Breite
- Z: vertikale Achse; Höhe
- X, Y: Horizontale; horizontale Ebene

- 0: Raum; Küche
- 01: Kochinsel
- 02: Küchenzeile
- 03: Küchenmöbel

- 1: (erstes) nicht-UWB-fähiges Haushaltsgerät; Backofen
- 10: Blende
- 11: Verschlusselement; Klappe
- 12: Anzeige-/Bedienelement; Display

- 2: (zweites) nicht-UWB-fähiges Haushaltsgerät; Dampfgarer
- 20: Blende
- 21: Verschlusselement; Klappe
- 22: Anzeige-/Bedienelement; Display

- 3: (drittes) nicht-UWB-fähiges Haushaltsgerät; Mikrowelle

- 4: UWB-fähiges Gerät; UWB-fähiges Sprachassistenzsystem

- 5: UWB-fähiges mobiles Endgerät; UWB-Wearable; UWB-Smartwatch

- 6: Person; Benutzer

## Patentansprüche

1. Haushaltsgerätesystem eines Raumes (0) mit
einem nicht-UWB-fähigen Haushaltsgerät (1; 2; 3),
einem UWB-fähigen Gerät (4) und
einem UWB-fähigen mobilen Endgerät (5) eines Benutzers (6),
wobei das UWB-fähige Gerät (4) ausgebildet und eingerichtet ist,
das UWB-fähige mobile Endgerät (5) zu identifizieren,
das UWB-fähige mobile Endgerät (5) relativ zu sich selbst, vorzugsweise mittels Abstand und Winkel, im Raum (0) zu lokalisieren und
die aktuelle Position (B) des Benutzers (6) anhand dessen UWB-fähigen mobilen Endgeräts (5) relativ zum nicht-UWB-fähigen Haushaltsgerät (1; 2; 3) im Raum (0) zu bestimmen, und
wobei das nicht-UWB-fähige Haushaltsgerät (1; 2; 3) ausgebildet und eingerichtet ist, falls sich der Benutzer (6) in einer vorbestimmten Nähe zum nicht-UWB-fähigen Haushaltsgerät (1; 2; 3) im Raum (0) befindet, einen benutzerspezifischen Betrieb auszuführen,
wobei das UWB-fähige Gerät (4) ferner ausgebildet und eingerichtet ist,
die aktuelle Position (B) des Benutzers (6) relativ zum nicht-UWB-fähigen Haushaltsgerät (1; 2; 3) im Raum (0) dem nicht-UWB-fähigen Haushaltsgerät (1; 2; 3) mittels einer nicht-UWB-Kommunikation zuzusenden, und
wobei das nicht-UWB-fähige Haushaltsgerät (1; 2; 3) ferner ausgebildet und eingerichtet ist,
die aktuelle Position (B) des Benutzers (6) relativ zu sich selbst im Raum (0) vom UWB-fähigen Gerät (4) mittels der nicht-UWB-Kommunikation zu erhalten,
wobei das nicht-UWB-fähige Haushaltsgerät (1; 2; 3) ausgebildet und eingerichtet ist,
eine erfolgte Bedienung durch den Benutzer (6) dem UWB-fähigen mobilen Endgerät (5) mittels der nicht-UWB-Kommunikation zuzusenden, und
das UWB-fähige Gerät (4) ausgebildet und eingerichtet ist,
die erfolgte Bedienung des nicht-UWB-fähigen Haushaltsgerät (1; 2; 3) durch den Benutzer (6) vom nicht-UWB-fähigen Haushaltsgerät (1; 2; 3) mittels der nicht-UWB-Kommunikation zu erhalten und das nicht-UWB-fähige Haushaltsgerät (1; 2; 3) der entsprechenden aktuellen Position (B) des Benutzers (6) relativ zu sich selbst im Raum (0) zuzuordnen.

2. Haushaltsgerätesystem nach Anspruch 1,
wobei der benutzerspezifische Betrieb eine benutzerspezifische Funktionsauswahl und/oder eine benutzerspezifische Funktionsparametrierung umfasst.

3. Haushaltsgerätesystem nach einem der vorangehenden Ansprüche,
wobei der benutzerspezifische Betrieb eine Aktivierung des nicht-UWB-fähigen Haushaltsgeräts (1; 2; 3) umfasst.

4. Haushaltsgerätesystem nach einem der vorangehenden Ansprüche,
wobei das Haushaltsgerätesystem mehrere nicht-UWB-fähige Haushaltsgerät (1; 2; 3) aufweist, welche jeweils ausgebildet und eingerichtet sind, jeweils einen benutzerspezifischen Betrieb auszuführen.

5. Haushaltsgerätesystem nach einem der Ansprüche 1-4,
wobei das UWB-fähige Gerät (4) ausgebildet und eingerichtet ist,
aus den bekannten Positionen (C) des Benutzers (6) relativ zu sich selbst eine Karte des Raums (0) zu erstellen und
aus der erfolgten Bedienung des nicht-UWB-fähigen Haushaltsgeräts (1; 2; 3) durch den Benutzer (6) das nicht-UWB-fähige Haushaltsgerät (1; 2; 3) der entsprechenden Position im Raum (0) zuzuordnen.

6. Haushaltsgerätesystem nach einem der Ansprüche 1-5,
wobei das UWB-fähige Gerät (4) ausgebildet und eingerichtet ist,
aus einer Abweichung der aktuellen Position (B) des Benutzers (6) im Raum (0) bei erfolgter Bedienung des nicht-UWB-fähigen Haushaltsgerät (1; 2; 3) und der zugeordneten Position des nicht-UWB-fähigen Haushaltsgerät (1; 2; 3) im Raum (0) eine Veränderung der eigenen Position im Raum (0) zu erkennen und,
in Reaktion hierauf, aus der erfolgten Bedienung des nicht-UWB-fähigen Haushaltsgeräts (1; 2; 3) durch den Benutzer (6) das nicht-UWB-fähige Haushaltsgerät (1; 2; 3) der entsprechenden neuen Position im Raum (0) zuzuordnen.

7. Haushaltsgerätesystem nach einem der vorangehenden Ansprüche,
wobei das UWB-fähige Gerät (4) ein UWB-fähiges Haushaltsgerät ist.

8. Haushaltsgerätesystem nach einem der Ansprüche 1 bis 6,
wobei das UWB-fähige Gerät (4) ein UWB-fähiges Sprachassistenzsystem (4) ist.

9. Verfahren zum Betrieb eines Haushaltsgerätesystems eines Raumes (0) mit wenigstens den Schritten:
Identifizieren eines UWB-fähigen mobilen Endgeräts (5), seitens eines UWB-fähigen Geräts (4),
Lokalisieren des UWB-fähigen mobilen Endgeräts (5), vorzugsweise mittels Abstand und Winkel, im Raum (0) relativ zu einem UWB-fähigen Gerät (4), seitens des UWB-fähigen Geräts (4),
Bestimmen der aktuellen Position (B) eines Benutzers (6) anhand dessen UWB-fähigen mobilen Endgeräts (5) relativ zu einem nicht-UWB-fähigen Haushaltsgerät (1; 2; 3) im Raum (0), seitens des UWB-fähigen Geräts (4), und falls sich der Benutzer (6) in einer vorbestimmten Nähe zum nicht-UWB-fähigen Haushaltsgerät (1; 2; 3) im Raum (0) befindet, Ausführen eines benutzerspezifischen Betriebs seitens des nicht-UWB-fähigen Haushaltsgeräts (1; 2; 3),
wobei das nicht-UWB-fähige Haushaltsgerät (1; 2; 3) die aktuelle Position (B) des Benutzers (6) relativ zu sich selbst im Raum (0) vom UWB-fähigen Gerät (4) mittels der nicht-UWB-Kommunikation erhält,
wobei eine erfolgte Bedienung durch den Benutzer (6) dem UWB-fähigen mobilen Endgerät (5) mittels der nicht-UWB-Kommunikation vom nicht-UWB-fähigen Haushaltsgerät (1; 2; 3) zugesendet wird, und
die erfolgte Bedienung des nicht-UWB-fähigen Haushaltsgerät (1; 2; 3) durch den Benutzer (6) vom nicht-UWB-fähigen Haushaltsgerät (1; 2; 3) mittels der nicht-UWB-Kommunikation vom UWB-fähigen Gerät (4) erhalten wird und das nicht-UWB-fähige Haushaltsgerät (1; 2; 3) der entsprechenden aktuellen Position (B) des Benutzers (6) relativ zu sich selbst im Raum (0) zugeordnet wird.

## Claims

1. Domestic appliance system for a space (0), comprising
a non-UWB-capable domestic appliance (1; 2; 3),
a UWB-capable appliance (4) and
a UWB-capable mobile terminal (5) of a user (6),
wherein the UWB-capable appliance (4) is designed and configured
to identify the UWB-capable mobile terminal (5),
to locate the UWB-capable mobile terminal (5) in the space (0) relative to itself, preferably in terms of distance and angle, and
to determine the current position (B) of the user (6) in the space (0) relative to the non-UWB-capable domestic appliance (1; 2; 3) using their UWB-capable mobile terminal (5), and
wherein the non-UWB-capable domestic appliance (1; 2; 3) is designed and configured to carry out a user-specific operation if the user (6) is situated in the space (0) at a predetermined proximity to the non-UWB-capable domestic appliance (1; 2; 3),
wherein the UWB-capable appliance (4) is further designed and configured
to send the current position (B) of the user (6) in the space (0) relative to the non-UWB-capable domestic appliance (1; 2; 3) to the non-UWB-capable domestic appliance (1; 2; 3) using non-UWB communication, and
wherein the non-UWB-capable domestic appliance (1; 2; 3) is further designed and configured
to obtain the current position (B) of the user (6) in the space (0) relative to itself from the UWB-capable appliance (4) using non-UWB communication,
wherein
the non-UWB-capable domestic appliance (1; 2; 3) is designed and configured
to send confirmation that usage has been performed by the user (6) to the UWB-capable mobile terminal (5) using non-UWB communication, and
the UWB-capable appliance (4) is designed and configured
to obtain confirmation of the performed usage of the non-UWB-capable domestic appliance (1; 2; 3) by the user (6) from the non-UWB-capable domestic appliance (1; 2; 3) using non-UWB communication and to assign the non-UWB-capable domestic appliance (1; 2; 3) to the corresponding current position (B) of the user (6) in the space (0) relative to itself.

2. Domestic appliance system according to claim 1,
wherein the user-specific operation comprises a user-specific function selection and/or a user-specific function parameterisation.

3. Domestic appliance system according to either of the preceding claims,
wherein the user-specific operation comprises activating the non-UWB-capable domestic appliance (1; 2; 3).

4. Domestic appliance system according to any of the preceding claims,
wherein the domestic appliance system has a plurality of non-UWB-capable domestic appliances (1; 2; 3), each of which is respectively designed and configured to carry out a user-specific operation.

5. Domestic appliance system according to any of claims 1-4,
wherein the UWB-capable appliance (4) is designed and configured
to create a map of the space (0) from the known positions (C) of the user (6) relative to itself and
to assign the non-UWB-capable domestic appliance (1; 2; 3) to the corresponding position in the space (0) on the basis of the performed usage of the non-UWB-capable domestic appliance (1; 2; 3) by the user (6).

6. Domestic appliance system according to any of claims 1-5,
wherein the UWB-capable appliance (4) is designed and configured
to detect a change in its own position in the space (0) on the basis of a deviation between the current position (B) of the user (6) in the space (0) during the performed usage of the non-UWB-capable domestic appliance (1; 2; 3) and the assigned position of the non-UWB-capable domestic appliance (1; 2; 3) in the space (0), and, in response thereto, to assign the non-UWB-capable domestic appliance (1; 2; 3) to the corresponding new position in the space (0) on the basis of the performed usage of the non-UWB-capable domestic appliance (1; 2; 3) by the user (6).

7. Domestic appliance system according to any of the preceding claims, wherein the UWB-capable appliance (4) is a UWB-capable domestic appliance.

8. Domestic appliance system according to any of claims 1 to 6, wherein the UWB-capable appliance (4) is a UWB-capable voice assistance system (4).

9. Method for operating a domestic appliance system for a space (0), the method comprising at least the steps of:
a UWB-capable appliance (4) identifying a UWB-capable mobile terminal (5),
a UWB-capable appliance (4) locating the UWB-capable mobile terminal (5) in the space (0) relative to the UWB-capable appliance (4), preferably in terms of distance and angle,
the UWB-capable appliance (4) determining the current position (B) of a user (6) in the space (0) relative to a non-UWB-capable domestic appliance (1; 2; 3) using their UWB-capable mobile terminal (5), and
the non-UWB-capable domestic appliance (1; 2; 3) carrying out a user-specific operation if the user (6) is situated in the space (0) at a predetermined proximity to the non-UWB-capable domestic appliance (1; 2; 3),
wherein the non-UWB-capable domestic appliance (1; 2; 3) obtains the current position (B) of the user (6) in the space (0) relative to itself from the UWB-capable appliance (4) using non-UWB communication,
wherein
confirmation that usage has been performed by the user (6) is sent from the non-UWB-capable domestic appliance (1; 2; 3) to the UWB-capable mobile terminal (5) using non-UWB communication, and
confirmation of the performed usage of the non-UWB-capable domestic appliance (1; 2; 3) by the user (6) is obtained by the UWB-capable appliance (4) from the non-UWB-capable domestic appliance (1; 2; 3) using non-UWB communication and the non-UWB-capable domestic appliance (1; 2; 3) is assigned to the corresponding current position (B) of the user (6) in the space (0) relative to itself.

## Revendications

1. Système d'appareils électroménagers d'une pièce (0) comportant
un appareil électroménager non compatible avec l'ULB (1 ; 2 ; 3),
un appareil compatible avec l'ULB (4) et
un terminal mobile compatible avec l'ULB (5) d'un utilisateur (6),
dans lequel l'appareil compatible avec l'ULB (4) est réalisé et configuré pour
identifier le terminal mobile compatible avec l'ULB (5),
localiser le terminal mobile compatible avec l'ULB (5) par rapport à lui-même, de préférence au moyen de la distance et de l'angle, dans la pièce (0) et
déterminer la position actuelle (B) de l'utilisateur (6) à l'aide de son terminal mobile compatible avec l'ULB (5) par rapport à l'appareil électroménager non compatible avec l'ULB (1 ; 2 ; 3) dans la pièce (0), et
dans lequel l'appareil électroménager non compatible avec l'ULB (1 ; 2 ; 3) est réalisé et configuré pour, si l'utilisateur (6) se trouve à une proximité prédéterminée de l'appareil électroménager non compatible avec l'ULB (1 ; 2 ; 3) dans la pièce (0), exécuter un fonctionnement spécifique à l'utilisateur,
dans lequel l'appareil compatible avec l'ULB (4) est en outre réalisé et configuré pour
envoyer la position actuelle (B) de l'utilisateur (6) par rapport à l'appareil électroménager non compatible avec l'ULB (1 ; 2 ; 3) dans la pièce (0) à l'appareil électroménager non compatible avec l'ULB (1 ; 2 ; 3) au moyen d'une communication non ULB, et
dans lequel l'appareil électroménager non compatible avec l'ULB (1 ; 2 ; 3) est en outre réalisé et configuré pour
obtenir la position actuelle (B) de l'utilisateur (6) par rapport à lui-même dans la pièce (0) à partir de l'appareil compatible avec l'ULB (4) au moyen de la communication non ULB,
dans lequel
l'appareil électroménager non compatible avec l'ULB (1 ; 2 ; 3) est réalisé et configuré pour
envoyer une commande effectuée par l'utilisateur (6) au terminal mobile compatible avec l'ULB (5) au moyen de la communication non ULB, et
l'appareil compatible avec l'ULB (4) est réalisé et configuré pour
obtenir la commande de l'appareil électroménager non compatible avec l'ULB (1 ; 2 ; 3) effectuée par l'utilisateur (6) à partir de l'appareil électroménager non compatible avec l'ULB (1 ; 2 ; 3) au moyen de la communication non UWB et associer l'appareil électroménager non compatible avec l'ULB (1 ; 2 ; 3) à la position actuelle (B) correspondante de l'utilisateur (6) par rapport à lui-même dans la pièce (0).

2. Système d'appareils électroménagers selon la revendication 1,
dans lequel le fonctionnement spécifique à l'utilisateur comprend une sélection de fonction spécifique à l'utilisateur et/ou un paramétrage de fonction spécifique à l'utilisateur.

3. Système d'appareils électroménagers selon l'une des revendications précédentes,
dans lequel le fonctionnement spécifique à l'utilisateur comprend une activation de l'appareil électroménager non compatible avec l'ULB (1 ; 2 ; 3).

4. Système d'appareils électroménagers selon l'une des revendications précédentes,
dans lequel le système d'appareils électroménagers présente plusieurs appareils électroménagers non compatibles avec l'ULB (1 ; 2 ; 3), lesquels sont respectivement réalisés et configurés pour exécuter respectivement un fonctionnement spécifique à l'utilisateur.

5. Système d'appareils électroménagers selon l'une des revendications 1 à 4,
dans lequel l'appareil compatible avec l'ULB (4) est réalisé et configuré pour
créer une carte de la pièce (0) à partir des positions (C) connues de l'utilisateur (6) par rapport à lui-même et
à partir de la commande de l'appareil électroménager non compatible avec l'ULB (1 ; 2 ; 3) effectuée par l'utilisateur (6), associer l'appareil électroménager non compatible avec l'ULB (1 ; 2 ; 3) à la position correspondante dans la pièce (0).

6. Système d'appareils électroménagers selon l'une des revendications 1 à 5,
dans lequel l'appareil compatible avec l'ULB (4) est réalisé et configuré pour
à partir d'un écart entre la position actuelle (B) de l'utilisateur (6) dans la pièce (0) lors de la commande de l'appareil électroménager non compatible avec l'ULB (1 ; 2 ; 3) effectuée et la position associée de l'appareil électroménager non compatible avec l'ULB (1 ; 2 ; 3) dans la pièce (0), détecter une modification de sa propre position dans la pièce (0) et, en réaction à cela, associer l'appareil électroménager non compatible avec l'ULB (1 ; 2 ; 3) à la nouvelle position correspondante dans la pièce (0) à partir de la commande de l'appareil électroménager non compatible avec l'ULB (1 ; 2 ; 3) effectuée par l'utilisateur (6).

7. Système d'appareils électroménagers selon l'une des revendications précédentes, dans lequel l'appareil compatible avec l'ULB (4) est un appareil électroménager compatible avec l'ULB.

8. Système d'appareils électroménagers selon l'une des revendications 1 à 6, dans lequel l'appareil compatible avec l'ULB (4) est un système d'assistance vocale compatible avec l'ULB (4).

9. Procédé permettant de faire fonctionner un système d'appareils électroménagers d'une pièce (0), comportant au moins les étapes consistant à :
identifier un terminal mobile compatible avec l'ULB (5), du côté
d'un appareil compatible avec l'ULB (4),
localiser le terminal mobile compatible avec l'ULB (5), de préférence au moyen de la distance et de l'angle, dans la pièce (0) par rapport à un appareil compatible avec l'ULB (4), du côté de l'appareil compatible avec l'ULB (4), déterminer la position actuelle (B) d'un utilisateur (6) à l'aide de son terminal mobile compatible avec l'ULB (5) par rapport à un appareil électroménager non compatible avec l'ULB (1 ; 2 ; 3) dans la pièce (0), du côté de l'appareil compatible avec l'ULB (4), et si l'utilisateur (6) se trouve à une proximité prédéterminée de l'appareil électroménager non compatible avec l'ULB (1 ; 2 ; 3) dans la pièce (0), exécuter un fonctionnement spécifique à l'utilisateur du côté de l'appareil électroménager non compatible avec l'ULB (1 ; 2 ; 3),
dans lequel l'appareil électroménager non compatible avec l'ULB (1 ; 2 ; 3) obtient
la position actuelle (B) de l'utilisateur (6) par rapport à lui-même dans la pièce (0)
à partir de l'appareil compatible avec l'ULB (4) au moyen de la communication non ULB,
dans lequel
une commande effectuée par l'utilisateur (6) est envoyée au terminal mobile compatible avec l'ULB (5) au moyen de la communication non ULB depuis l'appareil électroménager non compatible avec l'ULB (1 ; 2 ; 3), et
la commande de l'appareil électroménager non compatible avec l'ULB (1 ; 2 ; 3) effectuée par l'utilisateur (6) est reçue par l'appareil électroménager non compatible avec l'ULB (1 ; 2 ; 3) au moyen de la communication non ULB depuis l'appareil compatible avec l'ULB (4) et l'appareil électroménager non compatible avec l'ULB (1 ; 2 ; 3) est associé à la position actuelle (B) correspondante de l'utilisateur (6) par rapport à lui-même dans la pièce (0).
